# EUROPÄISCHE PATENTSCHRIFT

(11) **EP 3 023 460 B1**
(45) Veröffentlichungstag und Bekanntmachung des Hinweises auf die Patenterteilung: **21.08.2019**
(21) Anmeldenummer: 14193628.6
(22) Anmeldetag: 18.11.2014
(51) Int. Cl.: C08L 95/00, C08J 3/00

(54) **Verfahren zur Herstellung von Kaltmischgut**
Method for the preparation of cold mixed goods
Procédé de fabrication d'enrobé à froid

(43) Veröffentlichungstag der Anmeldung: 25.05.2016
(73) Patentinhaber: Bitunova Baustofftechnik GmbH, 3382 Loosdorf (AT)
(72) Erfinder: Zaismann, Harald, 8061 St. Radegund (AT)
(74) Vertreter: dompatent von Kreisler Selting Werner - Partnerschaft von Patent- und Rechtsanwälten mbB

(56) Entgegenhaltungen:
- DE-A1-102005 004 906
- DE-A1-102010 053 406
- US-A- 4 944 804
- US-A1- 2004 014 845
- US-A1- 2012 152 152

## Beschreibung

### Technisches Gebiet der Erfindung

Die Erfindung betrifft ein Verfahren zur Herstellung eines Kaltmischguts durch Mischen eines Mineralstoffgemischs mit einer wässrigen Bindemittelemulsion.

Die vorliegende Erfindung betrifft weiterhin ein Kaltmischgut, welches durch das erfindungsgemäße Verfahren erhalten wird, sowie dessen Verwendung im Straßenbau.

Weiterhin betrifft die vorliegende Erfindung die Verwendung eines hydratbildenden anorganischen Minerals zur Aufnahme von Wasser aus der wässrigen Bindemittelemulsion bei der Herstellung von Kaltmischgut und die Verwendung eines hydratbildenden anorganischen Minerals zum Brechen der wässrigen Bindemittelemulsion bei der Herstellung von Kaltmischgut.

### Technischer Hintergrund

Kaltmischgut (auch Kaltasphalt genannt) ist seit langem bekannt und wird in der Straßenerhaltung vor allem zum Verfüllen von Schlaglöchern, groben Rissen und auch für die Verfüllung von ausgeschnittenen bzw. ausgebrochenen, schadhaften Asphaltflächen eingesetzt.

Das Kaltmischgut besteht dabei typischerweise aus einem Mineralstoffgemisch, also gebrochenem Gestein verschiedener Fraktionen und einem bituminösem Bindemittel, welches das gebrochene Gestein zusammenhält.

Damit das Kaltmischgut kalt verarbeitet werden kann und genügend Lagerfähigkeit besitzt wird dem Kaltmischgut vorzugsweise ein Fluxmittel zugesetzt. Fluxmittel sind typischerweise schnell oder weniger schnell verdampfende Lösungsmittel, die nach Einbau des Kaltmischgutes (zum Beispiel in ein Schlagloch) gänzlich oder auch nur teilweise durch Verdunstung freigesetzt und an die Umgebungsluft abgegeben werden und somit zum Verfestigen des Bindemittels und damit des Kaltmischgutes führen.

Im sogenannten "Warmverfahren" zur Herstellung des Kaltmischgutes muss der Gesteinsanteil vorher getrocknet werden, wobei dies ein Erhitzen auf mindestens 105 °C erforderlich macht. Bei feuchtem Gestein besteht die Gefahr, dass die Gesteinsoberfläche vom (meist hydrophoben) Bindemittel nur unzureichend benetzt wird und das resultierende Kaltmischgut anschließend zu geringe Kohäsion aufweist.

Bevor das Kornhaufwerk mit dem Bindemittel vermischt werden kann, muss es auf ungefähr 70 °C bis 40 °C abgekühlt werden. Bei zu hohen Temperaturen des Mineralstoffgemisches würden beim Mischen mit dem Bindemittel bereits größere Mengen des Fluxmittels aus dem Bindemittel verdampfen und so zu einer zu frühen Verfestigung des Mischgutes führen. Andererseits ist es notwendig, das Bindemittel vor dem Mischen mit dem Mineralstoffgemisch auf ungefähr 60 °C bis 80 °C zu erwärmen, damit es ausreichend flüssig ist um Pumpfähigkeit und Dosierbarkeit zu gewährleisten.

Dieses "Warmverfahren" ist ziemlich aufwändig, energieintensiv und erfordert eine spezielle Mischanlage.

Als Alternative zum "Warmverfahren" hat sich daher in der Praxis auch ein "Kaltverfahren" durchgesetzt. Hierbei wird das Bindemittel in emulgierter Form zum Mineralstoffgemisch gegeben und muss daher nicht erhitzt werden. Dieses Herstellungsverfahren bietet deutliche Energie- und Kosteneinsparungen im Vergleich zum oben beschriebenen "Warmverfahren".

Das Mineralstoffgemisch muss im "Kaltverfahren" nicht vorgetrocknet sein, sondern kann in der jeweilig vorliegenden Form mit der Bindemittelemulsion gemischt werden.

Da die Emulsionen eine ausreichend lange Brechzeit aufweisen müssen, um ein vollständiges Benetzen und eine gänzliche Bedeckung der Gesteinsoberflächen zu gewährleisten, ist von relativ stabilen Emulsionen die Rede. Dies hat zur Folge, dass die Emulsionen auch noch nach Beendigung des Mischvorganges eine gewisse Zeit im Emulsionszustand verbleiben und daher ein Teil des Bindemittels wieder von der Gesteinsoberfläche abläuft. Dadurch ergeben sich jedoch zu dünne Bindemittelfilme, deren Dicke dann später nicht mehr für eine innere Verklebung des Mischgutes ausreicht.

Seit langer Zeit ist nun schon ein Verfahren bekannt, bei welchem dem Mineralstoffgemisch vor dem Mischen mit der Bindemittelemulsion Zement zugegeben wird. Die Zugabe kann auch während des Mischens oder am Ende des Mischens erfolgen. Die Zugabe des Zementes verfolgt das Ziel die Emulsion zu brechen und das freiwerdende Wasser zu binden.

DE 10 2010 053 406 A1 offenbart zum Beispiel eine Kaltasphaltmischung, die eine Mineralstoffkörnung und ein Bitumenbindemittel in einer wässrigen Emulsion aufweist, wobei dem Gemisch ein Mörtelbindemittel aus einer Zement/Kalk-Mischung zur Aufnahme des Wassers aus der Emulsion zugegeben wird.

DE 10 2005 004 906 A1 offenbart einen kalt verarbeitbaren Gussasphalt auf Emulsionsbasis, welcher ein Mineralstoffgemisch mit Füller sowie Bindemittel enthält. Zur Steuerung des Abbindens wird dem Mineralstoffgemisch dabei Zement zugegeben, welcher das Emulsionsgefüge stört und somit die Phasentrennung Wasser/Bindemittel einleitet (Brechen).

US-A-2012 152152 offenbart ein Zementmaterial. US-A-4 944 804 offenbart Kaltsphaphalte mit Anhydrit. US-A-2'004 014845 offenbart eine wässrige und ein hydratbildendes Mineral sowie ein Mlneralstoffgemisch.

Allerdings zeigen Laborversuche, dass das Brechen der Emulsion nach Zugabe von Zement, speziell bei Einsatz von stabilen Emulsionen nur verzögert einsetzt und die Bindung des freiwerdenden Wassers nur langsam erfolgt. Die Folge ist wiederum, dass durch das weiterhin von der Gesteinsoberfläche ablaufende Bindemittel zu dünne Bindemittelfilme ausgebildet werden. Bei höherer Dosierung des Zements ergeben sich weiterhin Probleme mit einer zu zähen Konsistenz des Mischgutes und/oder stumpf aussehenden Überzügen, die nicht nur optisch ein Problem darstellen sondern auch schlechte innere Verklebung des Mischgutes nach dem Einbau nach sich ziehen können.

Aufgrund der zuvor beschriebenen Nachteile, wie dem langsamen Brechen der Emulsion, welches geringe Filmdicken des Bindemittels nach sich zieht, sowie einer zähen Konsistenz oder stumpfem Aussehen des Kaltmischgutes, bestand ein Bedarf nach einem verbesserten Kaltmischgut sowie einem energiearmen Verfahren zu dessen Herstellung.

### Kurzbeschreibung der Erfindung

Die vorliegende Erfindung betrifft somit:
ein Verfahren zur Herstellung eines Kaltmischguts laut Anspruch 1 umfassend: das Mischen eines Mineralstoffgemischs mit einer wässrigen Bindemittelemulsion, wobei dem Mineralstoffgemisch und/oder der Mischung aus Mineralstoffgemisch und wässriger Bindemittelemulsion ein hydratbildendes anorganisches Mineral oder Mineralgemisch zugegeben wird.

In einer bevorzugten Ausführungsform ist das erfindungsgemäße Verfahren dadurch gekennzeichnet, dass das hydratbildende anorganische Mineral in einer Menge von 0,1 bis 10 Gew.-%, vorzugsweise 0,2 bis 7 Gew.-%, jeweils bezogen auf das Gesamtgewicht des Mineralstoffgemischs, zugegeben wird.

In einer weiteren bevorzugten Ausführungsform ist das erfindungsgemäße Verfahren dadurch gekennzeichnet, dass das Mischen des Mineralstoffgemischs mit der wässrigen Bindemittelemulsion bei einer Temperatur von 0 °C bis 100 °C, vorzugsweise von 5 °C bis 80 °C, besonders bevorzugt von 10 °C bis 70 °C erfolgt.

In einer weiteren bevorzugten Ausführungsform ist das erfindungsgemäße Verfahren dadurch gekennzeichnet, dass das Mineralstoffgemisch einen Feuchtegehalt von 0 bis 10 Gew.-%, vorzugsweise von 0,5 bis 5 Gew.-%, besonders bevorzugt von 1 bis 3 Gew.-% aufweist, jeweils bezogen auf das Gesamtgewicht des Mineralstoffgemischs.

In einer weiteren bevorzugten Ausführungsform ist das erfindungsgemäße Verfahren dadurch gekennzeichnet, dass die wässrige Bindemittelemulsion von 30 bis 75 Gew.-%, vorzugsweise von 35 bis 70 Gew.-%, besonders bevorzugt 40 bis 65 Gew.-% wenigstens eines Bindemittels, jeweils bezogen auf das Gesamtgewicht der Bindemittelemulsion enthält.

In einer weiteren bevorzugten Ausführungsform ist das erfindungsgemäße Verfahren dadurch gekennzeichnet, dass das Bindemittel ausgewählt ist aus der Gruppe bestehend aus Bitumen, natürlichen Asphalten, natürlichen und synthetischen Wachsen, Pechen, Harzen, Kunstharzen, polymerisierten Ölen und Mischungen derselben, wobei dem Bindemittel gegebenenfalls Polymere, vorzugsweise ausgewählt aus der Gruppe bestehend aus Styrol-Butadien-Blockcopolymeren (SBS), Styrol-Butadien-Kautschuken (SBR), Polyethylenen und Mischungen derselben zugemischt sein können.

In einer weiteren bevorzugten Ausführungsform ist das erfindungsgemäße Verfahren dadurch gekennzeichnet, dass das Bindemittel 1 bis 30 Gew.-%, vorzugsweise 2 bis 20 Gew.-%, besonders bevorzugt 5 bis 15 Gew.-% wenigstens eines Fluxmittels, jeweils bezogen auf das Gesamtgewicht der Bindemittelemulsion, enthält.

In einer weiteren bevorzugten Ausführungsform ist das erfindungsgemäße Verfahren dadurch gekennzeichnet, dass das Fluxmittel ausgewählt ist aus der Gruppe bestehend aus Mineralölfraktionen, Aromaten, Ester von Monocarbon-, Dicarbon-, und Tricarbonsäuren, Pflanzenölen und Mischungen derselben.

In einer weiteren bevorzugten Ausführungsform ist das erfindungsgemäße Verfahren dadurch gekennzeichnet, dass das Kaltmischgut erhältlich ist durch Vermischen von 75 Gew.-% bis 95 Gew.-% Mineralstoffgemisch, 0,2 Gew.-% bis 10 Gew.-% hydratbildendem anorganisches Mineral und 5 Gew.-% bis 24,8 Gew.-% Bindemittelemulsion, jeweils bezogen auf das Gesamtgewicht des Kaltmischgutes.

Dabei kann das erfindungsgemäße Verfahren ein oder mehrere der in den bevorzugten Ausführungsformen genannten Merkmale aufweisen.

### Weiterhin betrifft die vorliegende Erfindung:

Ein Katmischgut laut Anspruch 10, insbesondere für den Straßenbau, umfassend ein Mineralstoffgemisch und ein Bindemittel, wobei das Kaltmischgut, wie oben beschrieben, erhältlich ist durch Mischen eines Mineralstoffgemischs mit einer wässrigen Bindemittelemulsion, wobei dem Mineralstoffgemisch und/oder der Mischung aus Mineralstoffgemisch und wässriger Bindemittelemulsion ein hydratbildendes anorganisches Mineral oder Mineralgemisch zugegeben wird.

In einer besonderen Ausführungsform ist das obige Kaltmischgut dadurch gekennzeichnet, dass das Kaltmischgut erhältlich ist durch das oben genannte erfindungsgemäße Verfahren, wobei dieses Verfahren bevorzugt ein oder mehrere der in den bevorzugten Ausführungsformen genannten Merkmale aufweist.

In einer besonders bevorzugten Ausführungsform ist das erfindungsgemäße Verfahren und/oder das erfindungsgemäße Kaltmischgut dadurch gekennzeichnet, dass
(i) das Mineralstoffgemisch ausgewählt ist aus der Gruppe bestehend aus Basalten, Graniten, Quarziten, Andesiten, Melaphyren, Porphyren, Diabasen, Moränen oder Mischungen derselben mit Korngrößen von 0,005 bis 16 mm;
(ii) die wässrige Bindemittelemulsion eine kationische, anionische oder nichtionische Emulsion ist, wobei das Bindemittel ausgewählt ist aus der Gruppe aus Destillationsbitumen, Oxidationsbitumen, Hochvakuumbitumen, Hartbitumen, Polymer-modifizierten Bitumen, Pechen, Harzen, Kunstharzen, polymerisierte Ölen und deren Mischungen und das Lösungsmittel der Emulsion ausschließlich aus Wasser besteht;
(iii) das hydratbildende anorganische Mineral ausgewählt ist aus der Gruppe bestehend aus Calciumchlorid, Calciumsulfat, Cobalt(II)chlorid, Kupfer(II)sulfat, Magnesiumsulfat, Natriumsulfat, deren teilweise hydratisierten Vertretern und Mischungen derselben;
wobei das Kaltmischgut vor dem Aushärten/Verfestigen 75 bis 95 Gew.-%, vorzugsweise 80 Gew.-% oder mehr bis 90 Gew.-% oder weniger (i), 5 Gew.-% oder mehr bis 24,8 Gew.-% oder weniger, vorzugsweise 7 Gew.-% oder mehr bis 19 Gew.-% (ii) und 0,2 Gew.-% oder mehr bis 10 Gew.-%, vorzugsweise 1 Gew.-% oder mehr bis 5 Gew.-% oder weniger (iii) aufweist, jeweils bezogen auf das gesamte Gewicht des Kaltmischgutes.

In einer ganz besonderen Ausführungsform ist das erfindungsgemäße Verfahren und/oder das erfindungsgemäße Kaltmischgut dadurch gekennzeichnet, dass
(i) das Mineralstoffgemisch aus 5 Gew.-% oder mehr bis 35 Gew.-% oder weniger, vorzugsweise 10 Gew.-% oder mehr bis 20 Gew-% oder weniger Moräne mit einer Korngröße von bis zu 8 mm, vorzugsweise von bis zu 5 mm und 75 Gew.-% oder mehr bis 95 Gew.-% oder weniger, vorzugsweise 80 Gew.-% oder mehr bis 90 Gew.-% oder weniger Basalt mit einer Korngröße von 1 mm oder mehr bis 8 mm oder weniger, vorzugsweise 2 mm oder mehr bis 5 mm oder weniger, jeweils bezogen auf das gesamte Gewicht des Mineralstoffgemisches, besteht;
(ii) die Bitumenemulsion eine kationische Emulsion ist und 63 Gew.-% oder mehr bis 67 Gew.-% oder weniger Destillationsbitumen, 5 Gew.-% oder mehr bis 15 Gew.-% oder weniger wenigstens eines Fluxmittels, jeweils bezogen auf das Gesamtgewicht der Bitumenemulsion und Wasser aufweist; und
(iii) das hydratbildende anorganische Mineral ausgewählt ist aus der Gruppe bestehend aus wasserfreiem Calciumsulfat, wasserhaltigem Calciumsulfat und wasserfreiem Calciumchlorid;
wobei das Kaltmischgut vor dem Aushärten/Verfestigen 80 Gew.-% oder mehr bis 95 Gew.-% oder weniger, vorzugsweise 85 Gew.-% oder mehr bis 90 Gew.-% oder weniger (i), 5 Gew.-% oder mehr bis 15 Gew.-% oder weniger, vorzugsweise 7 Gew.-% oder mehr bis 10 Gew.-% oder weniger (ii) und 0,5 Gew.-% oder mehr bis 5 Gew.-% oder weniger, vorzugsweise 1 Gew.-% oder mehr bis 2,5 Gew.-% oder weniger (iii) aufweist, jeweils bezogen auf das gesamte Gewicht des Kaltmischgutes.

Weiterhin betrifft die vorliegende Erfindung die Verwendung des erfindungsgemäßen Kaltmischgutes für den Straßenbau, sowie die Verwendung eines hydratbildenden anorganischen Minerals zur Aufnahme von Wasser aus einer wässrigen Bindemittelemulsion und/oder zum Brechen einer wässrigen Bindemittelemulsion in dem oben genannten erfindungsgemäßen Verfahren, wobei dieses Verfahren bevorzugt ein oder mehrere der in den bevorzugten Ausführungsformen genannten Merkmale aufweist. Das erfindungsgemäße Kaltmischgut kann im Straßenbau insbesondere verwendet werden als Straßenbelag sowie in der Straßenerhaltung vor allem zum Verfüllen von Schlaglöchern, groben Rissen und auch für die Verfüllung von ausgeschnittenen bzw. ausgebrochenen, schadhaften Asphaltflächen.

### Beschreibung der Erfindung

Die vorliegende Erfindung betrifft ein Verfahren zur Herstellung eines Kaltmischguts, insbesondere für den Straßenbau, umfassend:
das Mischen eines Mineralstoffgemisches mit einer wässrigen Bindemittelemulsion, wobei dem Mineralstoffgemisch und/oder der Mischung aus Mineralstoffgemisch und wässriger Bindemittelemulsion ein hydratbildendes anorganisches Mineral zugegeben wird.

Das Mineralstoffgemisch kann dabei aus verschiedenen Kornfraktionen und gegebenenfalls verschiedenen Arten von Gesteinen bestehen.

In Abhängigkeit von den Anforderungen an den Straßenbelag, die wiederum von der Belastungsklasse der jeweiligen Straße bestimmt werden, kommt im Straßenbau eine Vielzahl von Gesteinen bzw. Mineralstoffen zum Einsatz. Für die Anforderungen an diese, im Straßenbau eingesetzten Mineralstoffe oder Gesteinsarten existieren in den verschiedenen Ländern Regelwerke und Vorschriften. In den EU-Ländern sind die technischen Vorschriften in diesem Bereich beispielsweise harmonisiert.

Insbesondere umfasst das erfindungsgemäße Mineralstoffgemisch Basalte, Granite, Quarzite, Andesite, Melaphyre, Porphyre, Diabase, Moräne oder Mischungen derselben.

Vorzugsweise ist das Mineralstoffgemisch unter den Einsatzbedingungen mineralogisch und chemisch stabil bzw. inert, um zum Beispiel bei Verwendung im Straßenbau einen Zerfall der Verkehrsfläche zu vermeiden.

Dementsprechend bildet das Mineralstoffgemisch vorzugsweise kein Hydrat durch Aufnahme von Wasser. Des Weiteren ist das Mineralstoffgemisch vorzugsweise oxidationsstabil, d.h. es reagiert nicht mit Luftsauerstoff.

Das Mineralstoffgemisch ist dabei vorzugsweise nicht identisch mit dem hydratbildenden anorganischen Minerals bzw. enthält es ein solches nicht.

Die Wahl der Gesteinskörnungen des Mineralstoffgemisches erfolgt nach Gesichtspunkten der Witterungsbeständigkeit, Festigkeit, Affinität (Haftverhalten) gegenüber dem Bindemittel, Polierresistenz und Farbe, aber auch der örtlichen Verfügbarkeit und der Transportkosten.

Vorzugsweise ist die durch Versiebung bestimmbare Korngröße des Mineralstoffgemisches 0,005 mm oder mehr und 20 mm oder weniger, besonders bevorzugt 0,01 mm oder mehr und 16 mm oder weniger, ganz besonders bevorzugt 0,1 mm oder mehr und 8 mm oder weniger.

Die im Verkehrswegebau einzusetzenden Mineralstoffe werden auch oft nach ihren Kornklassen unterschieden. In der EU sind Kornklassen wie zum Beispiel 0-2 mm, 2 - 4 mm, 4 - 8 mm, 8 - 11 mm, 11 - 16 mm, usw. üblich. Die Regelung erfolgt in den einschlägigen technischen Vorschriften.

Für Kaltmischgut kommen vorzugsweise folgende Fraktionen bzw. Kornklassen zum Einsatz: 0-2 mm, 0 - 3 mm, 0 - 4 mm, 2 - 4 mm, 4 - 8 mm, 8 - 11 mm, und 11 - 16 mm.

Die Korngrößenverteilung wird durch Versiebung nach EN 933 bestimmt.

Der Feuchtegehalt des Mineralstoffgemisches ist vorzugsweise 0 Gew.-% oder mehr und 10 Gew.-% oder weniger, besonders bevorzugt 0,5 Gew.-% oder mehr und 5 Gew.-% oder weniger, ganz bevorzugt 1 Gew.-% oder mehr und 3 Gew.-% oder weniger, jeweils bezogen auf das Gesamtgewicht des Mineralstoffgemisches. Der Feuchtegehalt des Mineralstoffgemisches kann durch Bestimmung des Masseverlustes (bis zur Gewichtskonstanz) bei 105 °C im Trockenschrank bestimmt werden.

Unter dem Begriff "Feuchtegehalt" wird der Anteil von Wasser im Mineralstoffgemisch verstanden, der nach der Gewinnung (zum Beispiel während des Waschens, Transports oder Lagerung) in den Mineralstoff gelangt. Beispielsweise handelt es sich hierbei um Regen oder Waschwasser.

Das Mischen des Mineralstoffgemisches mit der Bindemittelemulsion erfolgt vorzugsweise in einem einfachen Zwangsmischer, zum Beispiel einem Betonmischer oder Estrichmischer, bis die gesamte Gesteinsoberfläche gleichmäßig durch das Bindemittel bedeckt ist. Vorzugsweise hat das Mineralstoffgemisch beim Mischen eine Temperatur von -10 °C oder mehr und 70 °C oder weniger, besonders bevorzugt 0 °C oder mehr und 50 °C oder weniger, ganz besonders bevorzugt 10 °C oder mehr und 30 °C oder weniger.

Die Bindemittelemulsion hat vorzugsweise eine Temperatur von 5 °C oder mehr und 80 °C oder weniger, besonders bevorzugt 10 °C oder mehr und 50 °C oder weniger, ganz besonders bevorzugt 15 °C oder mehr und 30 °C oder weniger.

Bei sehr kaltem Mineralstoff, zum Beispiel bedingt durch Lagerung bei winterlichen Witterungsverhältnissen, kann über die Emulsionstemperatur eine entsprechende Temperatur des Kaltmischguts eingestellt werden.

Unter dem Begriff "wässrige Bindemittelemulsion" ist eine Emulsion aus Bindemittel, wässrigem Lösungsmittel und gegebenenfalls weiteren Additiven zu verstehen.

Unter dem Begriff "wässriges Lösungsmittel" versteht man ein Lösungsmittel bzw. Lösungsmittelgemisch, welches zu 50 Gew.-% oder mehr, vorzugsweise zu 80 Gew.-% oder mehr, insbesondere 90 Gew.-% oder mehr, ganz besonders bevorzugt 99 Gew.-% oder mehr aus Wasser besteht, jeweils bezogen auf das Gesamtgewicht des Lösungsmittels. In einer ganz besonders bevorzugten Ausführungsform besteht das wässrige Lösungsmittel ausschließlich aus Wasser.

Weitere geeignete Lösungsmittel, welche in dem wässrigen Lösungsmittel in einer Menge von weniger als 50 Gew.-%, vorzugsweise weniger als 20 Gew.-%, insbesondere weniger als 10 Gew.-%, ganz besonders bevorzugt weniger als 1 Gew.-% vorliegen können, jeweils bezogen auf das Gesamtgewicht des Lösungsmittels, sind beispielsweise ein- oder mehrwertige, primäre oder sekundäre Alkohole, Glykolether und Polyglykolether.

Die wässrige Bindemittelemulsion enthält das Bindemittel vorzugsweise in einer Menge von 30 Gew.-% oder mehr und 75 Gew.-% oder weniger, besonders bevorzugt 40 Gew.-% oder mehr und 70 Gew.-% oder weniger, ganz besonders bevorzugt 45 Gew.-% oder mehr und 65 Gew.-% oder weniger, jeweils bezogen auf das Gesamtgewicht der Bindemittelemulsion.

Geeignete Bindemittel für Kaltmischgut sind im Stand der Technik bekannt. Insbesondere eigenen sich Bitumen oder ein Gemisch aus Bitumen und/oder Pechen und/oder Harzen und/oder polymerisierten Ölen.

Bitumen wird in Raffinerien durch fraktionierte Destillation von Erdöl gewonnen und besteht aus verschiedenen organischen Substanzen. Bitumen ist thermoplastisch, d.h., die Viskosität (Fließverhalten) des Bitumens ändert sich mit der Temperatur.

Die verschiedenen Bitumenarten werden nach ihrer Herstellungsart oder ihren Anwendungsgebieten unterschieden.

Destillationsbitumen wird als Rückstand bei der Destillation von schwerem Rohöl bei Temperaturen zwischen 350 °C und 380 °C unter atmosphärischem Druck und anschließender Vakuum-Destillation unter vermindertem Druck erhalten.

Das nach der Destillation verbleibende Bitumen ist eine kolloidale Mischung von öligen Maltenen und hochmolekularen festeren Mizellen, die aus Asphaltenen und Harzen bestehen. Destillationsbitumen ist weich bis mittelhart und wird überwiegend im Straßenbau verwendet.

Für Oxidationsbitumen werden die weichen Destillationsbitumen bei Temperaturen zwischen 230 °C und 290 °C durch Einblasen von Luft weiterbehandelt. Hierbei erhält man durch Oxidation Bitumensorten, die gegen Kälte und Wärme widerstandsfähiger sind.

Hochvakuum- und Hartbitumen werden in einer weiteren Behandlungsstufe bei der Destillation, dem Entziehen hochsiedender Öle, gewonnen. Haupteigenschaft ist die harte bis springharte Konsistenz. Sie finden Verwendung z.B. bei der Herstellung von Gussasphalt für Estriche sowie für bituminöse Anstriche.

Polymer-modifizierte Bitumen werden durch chemische Vernetzung von Destillationsbitumen und Polymeren hergestellt. Hierbei verändert sich das thermoviskose und elastoviskose Verhalten des Bitumens. Anwendungsgebiete sind zum Beispiel besonders beanspruchte Verkehrsflächen im Straßen- und Flugplatzbau.

Das bituminöse Bindemittel kann dabei gänzlich oder auch nur anteilsweise durch natürliche Asphalte, natürlichen und synthetischen Wachse, Peche, Harze, Kunstharze, polymerisierte Öle (insbesondere polymerisierte Pflanzenöle) oder auch durch ein Gemisch dieser ersetzt werden.

Das bituminöse Bindemittel bzw. deren Gemische können mit Polymeren, wie zum Beispiel Styrol-Butadien-Blockcopolymeren (SBS), Styrol-Butadien-Kautschuken (SBR), und Polyethylenen modifiziert werden, um dessen Eigenschaften an die jeweiligen Erfordernisse anzupassen.

Darüber hinaus können dem Bindemittel gegebenenfalls noch Substanzen zur Verbesserung der Haftung des Bindemittels am Gestein zugesetzt werden. Geeignete Haftvermittler sind im Stand der Technik bekannt. Geeignet sind zum Beispiel Fettamine, Aminoamide, Imidazolidine, Polyamine, quaternäre Ammoniumverbindungen, Fettsäuren, N-beta-Aminoethylalkylimidazolin und Bis(silylpropyl)polysulfane und Mischungen davon. EP 1 283 239 A1 offenbart zum Beispiel Alkylamidoaminverbindungen und Alkylaminoimidazoline sowie deren Mischungen als Haftvermittler.

Die Haftvermittler werden der Bindemittelemulsion vorzugsweise in einer Menge von 0,05 Gew.-% oder mehr bis 5,0 Gew-% oder weniger, besonders bevorzugt von 0,1 Gew.-% oder mehr bis 3,0 Gew.-% oder weniger, ganz besonders bevorzugt von 0,5 Gew.-% oder mehr bis 1,5 Gew.-% oder weniger zugegeben, jeweils bezogen auf das Gesamtgewicht der Bindemittelemulsion.

Bei der Emulsion kann es sich um eine kationische, anionische, nicht-ionische oder eine amphotere Emulsion handeln. Geeignete Emulgatoren sind im Stand der Technik bekannt. Beispielsweise eignen sich Fettsäuren und Polycarboxyverbindungen für anionische Emulsionen, ein und mehrwertige Fettamine oder Aminoamide für kationische Emulsionen, substituierte Aminosäuren für amphotere Emulsionen und zum Beispiel Polyether von Fettalkoholen für nichtionische Emulsionen. Die Emulgatoren werden der Bindemittelemulsion vorzugsweise in einer Menge von 0,1 Gew.-% oder mehr und 5,0 Gew.-% oder weniger, besonders bevorzugt 0,2 Gew.-% oder mehr und 3,0 Gew.-% oder weniger, ganz besonders bevorzugt 0,5 Gew.-% oder mehr und 1,5 Gew.-% oder weniger zugegeben, jeweils bezogen auf das Gesamtgewicht der Bindemittelemulsion.

Das Brechverhalten wird unter anderem durch den Brechwert beschrieben. Dieser wird üblicherweise nach EN 13075-1 aus der Masse eines speziellen Füllers (Sand) bestimmt, der unter Normbedingungen der jeweiligen Bitumenemulsion zugemischt werden muss, damit diese bricht. Die Masse des Füllers (in Gramm) multipliziert mit 100 und dividiert durch die Menge an Emulsion (in Gramm), ergibt dann den Brechwert.

Die Brechwerte der Bitumenemulsionen, die zur Herstellung von Kaltmischgut verwendet werden liegen zwischen 50 und 180, vorzugsweise zwischen 70 und 155. Es können aber auch stabilere Emulsionen eingesetzt werden.

Die Emulsion kann weiterhin schnell bis langsam brechend sein kann.

Unter schnell brechenden Emulsionen werden üblicherweise Emulsionen verstanden, die innerhalb von 30 Minuten brechen. Unter mittelmäßig schnell brechenden Emulsionen werden üblicherweise Emulsionen verstanden, die innerhalb einer Stunde brechen. Unter langsam brechenden Emulsionen werden üblicherweise Emulsionen verstanden, die mehr als eine Stunde zum brechen benötigen.

Die Einstellung der Brechzeit erfolgt dabei über die Menge des zugegebenen Emulgators und/oder über den pH-Wert. Der pH-Wert kann dabei durch übliche im Stand der Technik bekannte Mittel eingestellt werden.

Das Kaltmischgut kann weiterhin Fluxmittel enthalten, damit es kalt verarbeitet werden kann und eine genügende Lagerfähigkeit besitzt. Das Fluxmittel wird der Bindemittelemulsion vorzugsweise in einer Menge von 1 Gew.-% oder mehr und 30 Gew-% oder weniger, vorzugsweise 2 Gew.-% oder mehr und 20 Gew.-% oder weniger, ganz besonders bevorzugt 5 Gew.-% oder mehr und 15 Gew.-% oder weniger beigemischt, jeweils bezogen auf das Gesamtgewicht der Bindemittelemulsion.

Geeignete Fluxmittel sind im Stand der Technik bekannt. Besonders geeignete Fluxmittel sind schnell oder weniger schnell verdampfende Lösungsmittel wie zum Beispiel Mineralölfraktionen (zum Beispiel Benzin, Kerosin, Petroleum, Gasöl), Aromaten, Ester von Monocarbon-, Dicarbon-, und Tricarbonsäuren, Pflanzenöle und Mischungen derselben. Nach Einbau des Kaltmischgutes (zum Beispiel in ein Schlagloch) werden die Fluxmittel gänzlich oder auch nur teilweise durch Verdunstung freigesetzt und an die Umgebung abgegeben, was gleichzeitig zu einer Verfestigung des Bindemittels und damit des Kaltmischguts führt.

Gemäß der vorliegenden Erfindung wird dem Mineralstoffgemisch und/oder der Mischung aus Mineralstoffgemisch und wässriger Bindemittelemulsion ein hydratbildendes anorganisches Mineral oder ein Gemisch aus hydratbildenden anorganischen Mineralien zugegeben.

Unter dem Begriff "anorganisches Mineral" sind homogene anorganische Verbindungen mit einer festen chemischen Zusammensetzung und einer definierten chemischen Struktur zu verstehen. "Mineralgemische" sind Mischungen verschiedener Mineralien und umfassen neben chemisch uneinheitlichen Gemischen auch chemisch einheitliche Gemische verschiedener Phasen unterschiedlicher Struktur.

Unter dem Begriff "hydratbildend" ist zu verstehen, dass das anorganische Mineral oder Mineralgemisch Wasser in Form von Kristallwasser (Hydratwasser) unter Bildung von Hydraten binden kann. Die Wassermoleküle können dabei koordinativ an Ionen des Minerals/Mineralgemisches oder als Strukturwasser über Wasserstoffbrückenbindungen an das Mineral/Mineralgemisch gebunden sein. Weiterhin besteht die Möglichkeit, dass die Wassermoleküle in kanalartigen Hohlräumen des Minerals/Mineralgemisches eingelagert werden, wie dies zum Beispiel bei Zeolithen (Alumosilikaten) der Fall ist.

Der Begriff "hydratbildendes anorganisches Mineral" umfasst dabei nicht nur wasserfreie Mineralien (Anhydrate), wie zum Beispiel Anhydrit (wasserfreies Calciumsulfat), sondern auch Mineralien, die schon teilweise hydratisiert sind und noch weitere Wassermoleküle in Form von Kristallwasser aufnehmen können, wie beispielsweise Gips (Calciumsulfat Dihydrat).

Hydratbildende anorganische Mineralien sind im Stand der Technik bekannt. Sie bestehen beispielsweise aus Sulfaten, Halogeniden, Phosphaten oder Carbonaten von Elementen der ersten und zweiten Hauptgruppe des Periodensystems sowie der Übergangsmetalle.

Vorzugsweise bestehen die hydratbildenden anorganischen Mineralien aus Sulfaten, Halogeniden, Phosphaten oder Carbonaten von Natrium, Kalium, Calcium, Magnesium, Cobalt, Kupfer und Eisen sowie Mischungen derselben.

Typische hydratbildende anorganische Mineralien bestehen beispielsweise aus Calciumchlorid, Calciumsulfat, Cobalt(II)chlorid, Kupfer(II)sulfat, Magnesiumsulfat, Natriumsulfat, deren teilweise hydratisierten Vertretern und Mischungen derselben.

Besonders bevorzugt sind hierbei hydratbildende anorganische Mineralien, die in Wasser neutral bis sauer reagieren (pH ≤ 7).

Weiterhin bevorzugt sind solche anorganischen Mineralien, die bei Raumtemperatur (21 °C) eine Wasserlöslichkeit von 1 g bis 8 g pro Liter Wasser, vorzugsweise von 3 g bis 6 g pro Liter Wasser, ganz bevorzugt von etwa 5 g pro Liter Wasser aufweisen.

Ganz besonders bevorzugt sind hierbei anorganische Mineralien, welche Calciumsulfat und dessen Hydrate umfassen oder enthalten.

Das hydratbildende anorganische Mineral ist Anhydrit (wasserfreies Calciumsulfat). Es kann synthetischen oder natürlichen Ursprungs sein. Als Rohstoff für Baugips wird Gipsstein (Anhydrit und Gips) verwendet. Er kommt in der Natur als kristallwasserhaltiges Calciumsulfat Ca[SO₄]•2 H₂O vor. Der Gipsstein wird in Drehrohröfen gebrannt (kalziniert). Dabei wird dem Gipsstein das Kristallwasser teilweise oder ganz entzogen.

Das hydratbildende anorganische Mineral wird dabei vorzugsweise in einer Menge von 0,1 Gew.-% oder mehr und 10 Gew.-% oder weniger, besonders bevorzugt 0,2 Gew.-% oder mehr und 7 Gew.-% oder weniger, jeweils bezogen auf das Gesamtgewicht des Mineralstoffgemisches, zugegeben um das Brechen der Emulsion herbeizuführen.

Die Zugabe des hydratbildenden anorganischen Minerals kann dabei zum Mineralstoffgemisch vor dem Vermischen mit der Bindemittelemulsion zugegeben werden. Das hydratbildenden anorganischen Mineerals wurde auch zur Mischung zugegeben werden nachdem das Mineralstoffgemisch bereits mit der Bindemittelemulsion vermischt.

Es wurde überraschend gefunden, dass hydratbildende anorganische Minerale im Vergleich zu Zement das Brechen der Emulsion schneller, effektiver und kontrollierbarer einleiten.

Während die Bindung von Wasser durch Zement üblicherweise innerhalb von mehreren Stunden bis mehreren Tagen erfolgt, findet die Bindung des Wassers gemäß der vorliegenden Erfindung vorzugsweise innerhalb einer Stunde, besonders bevorzugt innerhalb einer halben Stunde statt.

Ohne an eine Theorie gebunden zu sein wird angenommen, dass das Wasser der Emulsion beim Brechen in Form von Kristallwasser vom anorganischen Mineral in weniger als einer Stunde bzw. weniger als einer halben Stunde aufgenommen wird. Die Aufnahme des Wassers in Form von Kristallwasser erfolgt dabei schneller als die Wasseraufnahme über chemische Umwandlungsreaktionen, wie sie bei der Zugabe von Zement stattfindet.

Unter dem Begriff "Zement" versteht man in der heutigen Bautechnik üblicherweise einen gemahlenen Baustoff, der durch Brennen eines Rohstoffgemisches aus zerkleinertem Sand, Ton, Kalkstein und Eisenerz erhalten wird. Nach dem Brennen besteht der Zement chemisch gesehen zumeist aus Calciumoxid (CaO), Siliziumdioxid (SiO₂), Aluminiumoxid (Al₂O₃) und Eisenoxid (Fe₂O₃). Dem Zement können weiterhin verschiedene Stoffe zugemischt sein um die Eigenschaften je nach Bedarf zu verändern. Zum Beispiel können dem Zement Stoffe zugemischt werden, die das Erstarren verzögern.

Zement erhärtet durch chemische Reaktion mit Wasser (Hydratation) unter Bildung eines mehr oder weniger starren Gefüges verschiedener Hydratationsprodukte.

Unter dem Begriff "Kalk" versteht man in der heutigen Bautechnik, insbesondere zur Herstellung von Mörtel, üblicherweise Kalkhydrat (Löschkalk, Calciumhydroxid, stark basisch/ pH > 10). Kalkhydrat kann kein weiteres Wasser mehr aufnehmen. Durch Mischen von Kalkhydrat und Wasser wird im Stand der Technik (siehe zum Beispiel DE 10 2010 053 406 A1) ein Mörtel gebildet, welcher durch langsame Abgabe des Wasser an die Umgebung (Verdampfen) und Reaktion mit dem in der Luft enthaltenden Kohlendioxid (Karbonatisierung) über viele Jahre erhärtet.

Branntkalk (Calciumoxid) wird heute aus Sicherheitsgründen nicht mehr eingesetzt, da es mit Wasser beim sogenannten "Kalklöschen" stark exotherm und heftig gegebenenfalls unter Wasserdampfentwicklung (sogenanntes "Rauchen") reagiert.

Vorzugsweise enthält das Kaltmischgut gemäß der vorliegenden Erfindung keinen Zement und/oder keinen Kalk.

Das erfindungsgemäße Kaltmischgut zeigt glänzende, hohe Filmdicken und kann gelagert werden, ohne dass das Bindemittel abläuft. Versuche haben auch gezeigt, dass eine unmittelbar nach der Herstellung erfolgte Abfüllung in Kunststoffsäcke kein Problem darstellt.

Das erfindungsgemäße Kaltmischgut besteht vor dem Aushärten/Verfestigen vorzugsweise aus
75 Gew.-% oder mehr bis 95 Gew.-% oder weniger Mineralstoffgemisch,
0,2 Gew.-% oder mehr bis 10 Gew.-% oder weniger hydratbildendes anorganisches Mineral und
5 Gew.-% oder mehr bis 24,8 Gew.-% oder weniger Bindemittelemulsion,
jeweils bezogen auf das Gesamtgewicht des Kaltmischgutes.

Die Bindemittelemulsion besteht dabei vorzugsweise aus
40 Gew.-% oder mehr bis 70 Gew.-% oder weniger Bindemittel,
2 Gew.-% oder mehr bis 20 Gew.-% oder weniger Fluxmittel,
0,1 Gew.-% oder mehr bis 3,0 Gew.-% oder weniger Emulgatoren,
0 Gew.-% oder mehr bis 3,0 Gew.-% oder weniger an weiteren Additiven (zum Beispiel Haftvermittler) und
25 Gew.-% oder mehr bis 57,9 Gew-% wässrigem Lösungsmittel,
jeweils bezogen auf das Gesamtgewicht der Bindemittelemulsion.

Zu den einzelnen Bestandteilen des Kaltmischguts und der Bindemittelemulsion wird auf die obige Offenbarung verwiesen.

In einer besonderen Ausführungsform ist das erfindungsgemäße Verfahren und das erfindungsgemäße Kaltmischgut dadurch gekennzeichnet, dass
(i) das Mineralstoffgemisch ausgewählt ist aus der Gruppe bestehend aus Basalten, Graniten, Quarziten, Andesiten, Melaphyren, Porphyren, Diabasen, Moränen oder Mischungen derselben mit Korngrößen von 0,005 mm oder mehr bis 16 mm oder weniger;
(ii) die wässrige Bindemittelemulsion eine kationische, anionische oder nichtionische Emulsion ist, wobei das Bindemittel ausgewählt ist aus der Gruppe aus Destillationsbitumen, Oxidationsbitumen, Hochvakuumbitumen, Hartbitumen, Polymer-modifizierten Bitumen, Pechen, Harzen, Kunstharzen, polymerisierte Ölen und deren Mischungen und das Lösungsmittel der Emulsion ausschließlich aus Wasser besteht;
(iii) das hydratbildende anorganische Mineral ausgewählt ist aus der Gruppe bestehend aus Calciumchlorid, Calciumsulfat, Cobalt(II)chlorid, Kupfer(II)sulfat, Magnesiumsulfat, Natriumsulfat, deren teilweise hydratisierten Vertretern und Mischungen derselben,
wobei das Kaltmischgut vor dem Aushärten/Verfestigen 75 Gew.-% oder mehr bis 95 Gew.-% oder weniger, vorzugsweise 80 Gew.-% oder mehr bis 90 Gew.-% oder weniger (i), 5 Gew.-% oder mehr bis 24,8 Gew.-% oder weniger, vorzugsweise 7 Gew.-% oder mehr bis 19 Gew.-% (ii) und 0,2 Gew.-% oder mehr bis 10 Gew.-%, vorzugsweise 1 Gew.-% oder mehr bis 5 Gew.-% oder weniger (iii) aufweist, jeweils bezogen auf das gesamte Gewicht des Kaltmischgutes.

In einer ganz besonderen Ausführungsform ist das erfindungsgemäße Verfahren und das erfindungsgemäße Kaltmischgut dadurch gekennzeichnet, dass
(i) das Mineralstoffgemisch aus 5 Gew.-% oder mehr bis 35 Gew.-% oder weniger, vorzugsweise 10 Gew.-% oder mehr bis 20 Gew-% oder weniger Moräne mit einer Korngröße von bis zu 8 mm, vorzugsweise von bis zu 5 mm und 75 Gew.-% oder mehr bis 95 Gew.-% oder weniger, vorzugsweise 80 Gew.-% oder mehr bis 90 Gew.-% oder weniger Basalt mit einer Korngröße von 1 mm oder mehr bis 8 mm oder weniger, vorzugsweise 2 mm oder mehr bis 5 mm oder weniger, jeweils bezogen auf das gesamte Gewicht des Mineralstoffgemisches, besteht;
(ii) die Bitumenemulsion eine kationische Emulsion ist und 63 Gew.-% oder mehr bis 67 Gew.-% oder weniger Destillationsbitumen, 5 Gew.-% oder mehr bis 15 Gew.-% oder weniger wenigstens eines Fluxmittels, jeweils bezogen auf das Gesamtgewicht der Bitumenemulsion und Wasser aufweist; und
(iii) das hydratbildende anorganische Mineral ausgewählt ist aus der Gruppe bestehend aus wasserfreiem Calciumsulfat, wasserhaltigem Calciumsulfat und wasserfreiem Calciumchlorid,
wobei das Kaltmischgut vor dem Aushärten/Verfestigen 80 Gew.-% oder mehr bis 95 Gew.-% oder weniger, vorzugsweise 85 Gew.-% oder mehr bis 90 Gew.-% oder weniger (i), 5 Gew.-% oder mehr bis 15 Gew.-% oder weniger, vorzugsweise 7 Gew.-% oder mehr bis 10 Gew.-% oder weniger (ii) und 0,5 Gew.-% oder mehr bis 5 Gew.-% oder weniger, vorzugsweise 1 Gew.-% oder mehr bis 2,5 Gew.-% oder weniger (iii) aufweist, jeweils bezogen auf das gesamte Gewicht des Kaltmischgutes.

### Beispiele

Die Erfindung wird im Folgenden anhand der nachstehend aufgeführten Beispiele erläutert, die jedoch nicht als einschränkend verstanden werden sollen.

### Materialien:

Um möglichst praxisgerechte Voraussetzungen herzustellen wurde der Mineralstoff wie folgt vorbereitet:
Zu 150 g Moräne mit einer Korngröße von bis zu 4 mm und 850 g Basalt mit einer Korngröße von 2 bis 4 mm wurden 10,1 g Wasser zugegeben und die Mischung in einer Kasserolle mittels einer Edelstahlgabel von Hand gemischt. Diese Mischung wurde für die spätere Verwendung in eine luftdicht abgeschlossene Dose aus Polypropylen überführt und so für die spätere Anwendung gelagert. Der Feuchtegehalt dieses Mineralstoffgemisches betrug 1,0 Gew.-% bezogen auf das Gesamtgewicht des Mineralstoffgemisches.

Als Bindemittelemulsion wurde eine kommerziell erhältliche mittelbrechende, kationischen Bitumenemulsion (C65BF4: 63 - 67 Gew.-% Destillationsbitumen und 5 - 15 Gew.-% Fluxmittel in Wasser, Brechklasse 4) verwendet.

Alle weiteren Materialen sind übliche, kommerziell erhältliche Stoffe, welche ohne weitere Vorbehandlung verwendet wurden.

### Methoden:

### Feuchtegehalt des Mineralstoffgemisches:

Der Feuchtegehalt des Mineralstoffgemisches wurde durch Bestimmung des Masseverlustes einer Probe bei 105 °C im Trockenschrank bestimmt. Die Probe des Mineralstoffs verbleibt bis zur Massekonstanz im Trockenschrank. Je nach Probemenge beträgt die Trocknungszeit bis zur Gewichtskonstanz etwa 2 bis 4 Stunden.

Die Korngröße wurde durch Versiebung nach EN 933 bestimmt.

Alle Experimente und Untersuchungen wurden, soweit nichts anderes angegeben, bei Raumtemperatur (21 °C) durchgeführt.

### Beispiel 1:

Zu 200 g des oben beschriebenen Mineralstoffgemisches wurde 3 g Baugips (wasserhaltiges Calciumsulfat) zugegeben und in einer Kasserolle mit Hilfe einer Edelstahlgabel gemischt. Zur Mischung wurden 20 g der Bitumenemulsion gegeben und unverzüglich gemischt.

Die Mischzeit bis zum Einsetzen des Brechens betrug 25 Sekunden.

Nach einer halben Stunde wurde das Kaltmischgut optisch begutachtet. Es zeigte tiefschwarz glänzende Oberflächen und ausreichend dicke Bindemittelfilme, wobei 99 % der Mineralstoffoberfläche vom Bindemittel bedeckt waren.

Nach 12 Stunden Lagerung in einer luftdicht verschlossenen Kunststoffdose bei 5 °C wurden näherungsweise 2,4 g Kondenswasser gemessen.

### Beispiel 2:

Zu 200 g oben beschriebenen Mineralstoffgemisches wurde 3 g Anhydrit (wasserfreies Calciumsulfat) zugegeben und in einer Kasserolle mit Hilfe einer Edelstahlgabel gemischt. Zur Mischung wurden 20 g der Bitumenemulsion gegeben und unverzüglich gemischt.

Die Mischzeit bis zum Einsetzen des Brechens betrug 20 bis 25 Sekunden.

Nach einer halben Stunde wurde das Kaltmischgut optisch begutachtet. Es zeigte tiefschwarz glänzende Oberflächen und ausreichend dicke Bindemittelfilme, wobei 99 % der Mineralstoffoberfläche vom Bindemittel bedeckt waren.

Nach 12 Stunden Lagerung in einer luftdicht verschlossenen Kunststoffdose bei 5 °C wurden näherungsweise 2,0 g Kondenswasser gemessen.

### Beispiel 3:

Zu 200 g oben beschriebenen Mineralstoffgemisches wurde 3 g wasserfreies Calciumchlorid zugegeben und in einer Kasserolle mit Hilfe einer Edelstahlgabel gemischt. Zur Mischung wurden 20 g der Bitumenemulsion gegeben und unverzüglich gemischt.

Die Mischzeit bis zum Einsetzen des Brechens betrug 15 bis 20 Sekunden.

Nach einer halben Stunde wurde das Kaltmischgut optisch begutachtet. Es zeigte tiefschwarz glänzende Oberflächen und ausreichend dicke Bindemittelfilme, wobei 99 % der Mineralstoffoberfläche vom Bindemittel bedeckt waren.

Nach 12 Stunden Lagerung in einer luftdicht verschlossenen Kunststoffdose bei 5 °C wurden näherungsweise 1,9 g Kondenswasser gemessen.

### Vergleichsbeispiel 1:

Zu 200 g oben beschriebenen Mineralstoffgemisches wurde 3 g Zement (CEM II 42 N) zugegeben und in einer Kasserolle mit Hilfe einer Edelstahlgabel gemischt. Zur Mischung wurden 20 g der Bitumenemulsion gegeben und unverzüglich gemischt.

Die Mischzeit bis zum Einsetzen des Brechens betrug 10 bis 15 Sekunden.

Nach einer halben Stunde wurde das Kaltmischgut optisch begutachtet. Es zeigte mattschwarze Oberflächen und nur dünne Bindemittelfilme, wobei nur 80 % der Mineralstoffoberfläche vom Bindemittel bedeckt waren.

Nach 12 Stunden Lagerung in einer luftdicht verschlossenen Kunststoffdose bei 5 °C wurden näherungsweise 3,5 g Kondenswasser gemessen.

### Vergleichsbeispiel 2:

Zu 200 g des oben beschriebenen Mineralstoffgemisches wurde 3 g einer Mischung aus Zement (CEM II 42 N) und Kalkhydrat (Baukalk) im Gewichts-Verhältnis 1:1 zugegeben und in einer Kasserolle mit Hilfe einer Edelstahlgabel gemischt. Zur Mischung wurden 20 g der Bitumenemulsion gegeben und unverzüglich gemischt.

Die Mischzeit bis zum Einsetzen des Brechens betrug 10 Sekunden.

Nach einer halben Stunde wurde das Kaltmischgut optisch begutachtet. Es zeigte mattschwarze Oberflächen und nur dünne Bindemittelfilme, wobei nur 80 % der Mineralstoffoberfläche vom Bindemittel bedeckt waren.

Nach 12 Stunden Lagerung in einer luftdicht verschlossenen Kunststoffdose bei 5 °C wurden näherungsweise 3,2 g Kondenswasser gemessen.

Die Ergebnisse der Beispiele und Vergleichsbeispiele sind in folgender Tabelle 1 zusammengefasst:

**Tabelle 1:**

| | **Beispiele** | | | **Vergleichsbeispiele** | |
|---|---|---|---|---|---|
| | 1 (Gips) | 2 (Anhydrit) | 3 (CaCl₂) | 1 (Zement) | 2 (Zement/Kalk) |
| Mischzeit bis zum Einsetzen des Brechens | 25 s | 20 - 25 s | 15 - 20 s | 10 - 15 s | 10 s |
| Oberfläche des Kaltmischgutes | glänzend schwarz | glänzend schwarz | glänzend schwarz | mattschwarz | mattschwarz |
| Bindemittelfilm | dick | dick | dick | dünn | dünn |
| Bedeckungsgrad des Bindemittels | 99 % | 99 % | 99 % | 80 % | 80 % |
| Bildung von Kondenswasser | 2,4 g | 2,0 g | 1,9 g | 3,5 g | 3,2 g |

Anmerkung zu Tabelle 1: Die Beurteilung der Dicke des Bindemittelfilms erfolgte visuell, optisch. Bei dünnen Filmen scheinen die Gesteinsoberflächen durch den Film, wodurch es Farbunterschiede gibt; bei höheren Filmstärken erscheint die Gesteinsoberfläche tief schwarz. Ein weiteres Beurteilungskriterium sind die Brechkanten der Körner; dünne Filme ergeben scharfe Brechkanten - je dicker der Film desto "abgerundeter erscheinen die Brechkanten der einzelnen Körner. Der in der Tabelle verwendete Begriff "dick" bedeutet also "Kanten und Flächen tief schwarz, Kanten abgerundet" und "dünn" bedeutet "Kanten und Flächen durchscheinend, Kanten scharf".

Die Mischzeiten zeigen, dass durch die stark alkalische Reaktion des Zements und Kalks das Brechen der Emulsion früher eingeleitet wird, als durch die leicht sauer reagierenden hydratbildenden anorganischen Minerale. In weiterer Folge scheint es so zu sein, dass das, durch die Zugabe von Zement bzw. Zement-Kalkgemisch geschaffene, basische Milieu die Affinität des Binders zur Mineralstoffoberfläche verringert, was an der deutlich schlechteren Bedeckung der Mineralstoffoberfläche erkennbar wird. Schließlich zeigt die Menge des in einem geschlossenen Behälter während der Lagerung entstehenden Kondenswassers, die deutlich bessere bzw. auch schnellere Bindung des Wassers durch die hydratbildenden Stoffe.

## Patentansprüche

1. Verfahren zur Herstellung eines Kaltmischguts umfassend:
das Mischen eines Mineralstoffgemischs mit einer wässrigen Bindemittelemulsion, wobei dem Mineralstoffgemisch und/oder der Mischung aus Mineralstoffgemisch und wässriger Bindemittelemulsion ein hydratbildendes anorganisches Mineral oder Mineralgemisch zugegeben wird, **dadurch gekennzeichnet, dass** das hydratbildende anorganische Mineral Anhydrit ist.

2. Verfahren gemäß Anspruch 1, **dadurch gekennzeichnet, dass** das hydratbildende anorganische Mineral in einer Menge von 0,1 Gew.-% bis 10 Gew.-%, vorzugsweise 0,2 Gew.-% bis 7 Gew.-%, jeweils bezogen auf das Gesamtgewicht des Mineralstoffgemischs, zugegeben wird.

3. Verfahren gemäß einem der Ansprüche 1 oder 2, **dadurch gekennzeichnet, dass** das Mischen des Mineralstoffgemischs mit der wässrigen Bindemittelemulsion bei einer Temperatur von 0 °C bis 100 °C, vorzugsweise von 5 °C bis 80 °C, besonders bevorzugt von 10 °C bis 70 °C erfolgt.

4. Verfahren gemäß einem oder mehreren der Ansprüche 1 bis 3, **dadurch gekennzeichnet, dass** das Mineralstoffgemisch einen Feuchtegehalt von 0 Gew.-% bis 10 Gew.-%, vorzugsweise von 0,5 Gew.-% bis 5 Gew.-%, besonders bevorzugt von 1 Gew.-% bis 3 Gew.-% aufweist, jeweils bezogen auf das Gesamtgewicht des Mineralstoffgemischs.

5. Verfahren gemäß einem oder mehreren der Ansprüche 1 bis 4, **dadurch gekennzeichnet, dass** die wässrige Bindemittelemulsion von 30 Gew.-% bis 75 Gew.-%, vorzugsweise von 35 bis 70 Gew.-%, besonders bevorzugt 40 Gew.-% bis 65 Gew.-% wenigstens eines Bindemittels, jeweils bezogen auf das Gesamtgewicht der Bindemittelemulsion enthält.

6. Verfahren gemäß einem oder mehreren der Ansprüche 1 bis 5, **dadurch gekennzeichnet, dass** das Bindemittel ausgewählt ist aus der Gruppe bestehend aus Bitumen, natürlichen Asphalten, natürlichen und synthetischen Wachsen, Pechen, Harzen, Kunstharzen, polymerisierten Ölen und Mischungen derselben, wobei dem Bindemittel gegebenenfalls Polymere, vorzugsweise ausgewählt aus der Gruppe bestehend aus Styrol-Butadien-Blockcopolymeren (SBS), Styrol-Butadien-Kautschuken (SBR), Polyethylenen und Mischungen derselben zugemischt sein können.

7. Verfahren gemäß einem oder mehreren der Ansprüche 1 bis 6, **dadurch gekennzeichnet, dass** das Bindemittel 1 Gew.-% bis 30 Gew.-%, vorzugsweise 2 Gew.-% bis 20 Gew.-%, besonders bevorzugt 5 Gew.-% bis 15 Gew.-% wenigstens eines Fluxmittels, jeweils bezogen auf das Gesamtgewicht der Bindemittelemulsion, enthält.

8. Verfahren gemäß einem oder mehreren der Ansprüche 1 bis 7, **dadurch gekennzeichnet, dass** das Fluxmittel ausgewählt ist aus der Gruppe bestehend aus Mineralölfraktionen, Aromaten, Ester von Monocarbon-, Dicarbon-, und Tricarbonsäuren, Pflanzenölen und Mischungen derselben.

9. Verfahren gemäß einem oder mehreren der Ansprüche 1 bis 8, **dadurch gekennzeichnet, dass** das Kaltmischgut erhältlich ist durch Vermischen von 75 Gew.-% bis 95 Gew.-% Mineralstoffgemisch, 0,2 Gew.-% bis 10 Gew.-% hydratbildendem anorganischem Mineral und 5 Gew.-% bis 24,8 Gew.-% Bindemittelemulsion, jeweils bezogen auf das Gesamtgewicht des Kaltmischgutes.

10. Kaltmischgut, insbesondere für den Straßenbau, umfassend ein Mineralstoffgemisch und ein Bindemittel, **dadurch gekennzeichnet, dass** das Kaltmischgut erhältlich ist durch Mischen eines Mineralstoffgemischs mit einer wässrigen Bindemittelemulsion, wobei dem Mineralstoffgemisch und/oder der Mischung aus Mineralstoffgemisch und wässriger Bindemittelemulsion ein hydratbildendes anorganisches Mineral oder Mineralgemisch zugegeben wird,
wobei das hydratbildende anorganische Mineral Anhydrit ist.

11. Kaltmischgut gemäß Anspruch 10, **dadurch gekennzeichnet, dass** das Kaltmischgut erhältlich ist durch ein Verfahren nach einem oder mehreren der Ansprüche 1 bis 9.

12. Verwendung des Kaltmischgutes nach einem oder mehreren der Ansprüche 10 oder 11 für den Straßenbau.

## Claims

1. A process for preparing a cold mix, comprising:
the mixing of a mineral mixture with an aqueous binder emulsion, wherein a hydrate-forming inorganic mineral or mineral mixture is added to said mineral mixture and/or said mixture of mineral mixture and aqueous binder emulsion, **characterized in that** said hydrate-forming inorganic mineral is anhydrite.

2. The process according to claim 1, **characterized in that** said hydrate-forming inorganic mineral is added in an amount of from 0.1% by weight to 10% by weight, preferably from 0.2% by weight to 7% by weight, respectively based on the total weight of the mineral mixture.

3. The process according to either of claims 1 or 2, **characterized in that** said mixing of the mineral mixture with the aqueous binder emulsion is effected at a temperature of from 0 °C to 100 °C, preferably from 5 °C to 80 °C, more preferably from 10 °C to 70 °C.

4. The process according to one or more of claims 1 to 3, **characterized in that** said mineral mixture has a moisture content of from 0% by weight to 10% by weight, preferably from 0.5% by weight to 5% by weight, more preferably from 1% by weight to 3% by weight, respectively based on the total weight of the mineral mixture.

5. The process according to one or more of claims 1 to 4, **characterized in that** said aqueous binder emulsion contains from 30% by weight to 75% by weight, preferably from 35 to 70% by weight, more preferably from 40% by weight to 65% by weight, of at least one binder, respectively based on the total weight of the binder emulsion.

6. The process according to one or more of claims 1 to 5, **characterized in that** said binder is selected from the group consisting of bitumen, natural asphalts, natural and synthetic waxes, pitches, resins, artificial resins, polymerized oils, and mixtures thereof, wherein polymers, preferably selected from the group consisting of styrene-butadiene block copolymers (SBS), styrene-butadiene rubbers (SBR), polyethylene and mixtures thereof may optionally be admixed with the binder.

7. The process according to one or more of claims 1 to 6, **characterized in that** said binder contains from 1% by weight to 30% by weight, preferably from 2% by weight to 20% by weight, more preferably from 5% by weight to 15% by weight, of at least one flux, respectively based on the total weight of the binder emulsion.

8. The process according to one or more of claims 1 to 7, **characterized in that** said flux is selected from the group consisting of mineral oil fractions, aromatics, esters of monocarboxylic, dicarboxylic and tricarboxylic acids, vegetable oils, and mixtures thereof.

9. The process according to one or more of claims 1 to 8, **characterized in that** said cold mix is obtainable by mixing 75% by weight to 95% by weight of mineral mixture, from 0.2% by weight to 10% by weight of hydrate-forming inorganic mineral, and from 5% by weight to 24.8% by weight of binder emulsion, respectively based on the total weight of the cold mix.

10. A cold mix, especially for road construction, comprising a mineral mixture and a binder, **characterized in that** said cold mix is obtainable by mixing a mineral mixture with an aqueous binder emulsion, wherein a hydrate-forming inorganic mineral or mineral mixture is added to said mineral mixture and/or said mixture of mineral mixture and aqueous binder emulsion, wherein said hydrate-forming inorganic mineral is anhydrite.

11. The cold mix according to claim 10, **characterized in that** said cold mix is obtainable by a process according to one or more of claims 1 to 9.

12. Use of the cold mix according to one or more of claims 10 or 11 for road construction.

## Revendications

1. Procédé de fabrication d'un enrobé à froid, comprenant :
le mélange d'un mélange de matières minérales avec une émulsion aqueuse de liant, un minéral ou un mélange de minéraux inorganiques formant des hydrates étant ajouté au mélange de matières minérales et/ou au mélange du mélange de matières minérales et de l'émulsion aqueuse de liant, **caractérisé en ce que** le minéral inorganique formant des hydrates est une anhydrite.

2. Procédé selon la revendication 1, **caractérisé en ce que** le minéral inorganique formant des hydrates est ajouté en une quantité de 0,1 % en poids à 10 % en poids, de préférence de 0,2 % en poids à 7 % en poids, dans chaque cas par rapport au poids total du mélange de matières minérales.

3. Procédé selon l'une des revendications 1 ou 2, **caractérisé en ce que** le mélange du mélange de matières minérales avec l'émulsion aqueuse de liant a lieu à une température de 0 °C à 100 °C, de préférence de 5 °C à 80 °C, d'une manière particulièrement préférée de 10 °C à 70 °C.

4. Procédé selon une ou plusieurs des revendications 1 à 3, **caractérisé en ce que** le mélange de matières minérales présente une teneur en humidité de 0 % en poids à 10 % en poids, de préférence de 0,5 % en poids à 5 % en poids, d'une manière particulièrement préférée de 1 % en poids à 3 % en poids, dans chaque cas par rapport au poids total du mélange de matières minérales.

5. Procédé selon une ou plusieurs des revendications 1 à 4, **caractérisé en ce que** l'émulsion aqueuse de liant contient 30 % en poids à 75 % en poids, de préférence 35 à 70 % en poids, d'une manière particulièrement préférée 40 % en poids à 65 % en poids d'au moins un liant, dans chaque cas par rapport au poids total de l'émulsion de liant.

6. Procédé selon une ou plusieurs des revendications 1 à 5, **caractérisé en ce que** le liant est choisi dans le groupe composé de bitumes, d'asphaltes naturels, de cires naturelles et synthétiques, de poix, de résines naturelles, de résines synthétiques, d'huiles polymérisées et de mélanges de ceux-ci, des polymères, de préférence choisis dans le groupe composé de copolymères bloc de styrène-butadiène (SBS), de caoutchoucs de styrène-butadiène (SBR), de polyéthylènes et de mélanges de ceux-ci, pouvant éventuellement être mélangés au liant.

7. Procédé selon une ou plusieurs des revendications 1 à 6, **caractérisé en ce que** le liant contient 1 % en poids à 30 % en poids, de préférence 2 % en poids à 20 % en poids, d'une manière particulièrement préférée 5 % en poids à 15 % en poids, d'au moins un diluant, dans chaque cas par rapport au poids total de l'émulsion de liant.

8. Procédé selon une ou plusieurs des revendications 1 à 7, **caractérisé en ce que** le diluant est choisi dans le groupe composé de fractions d'huiles minérales, de composés aromatiques, d'esters d'acides monocarboxyliques, dicarboxyliques et tricarboxyliques, d'huiles végétales et de mélanges de ceux-ci.

9. Procédé selon une ou plusieurs des revendications 1 à 8, **caractérisé en ce que** l'enrobé à froid peut être obtenu par mélange de 75 % en poids à 95 % en poids d'un mélange de matières minérales, de 0,2 % en poids à 10 % en poids d'un minéral inorganique formant des hydrates et de 5 % en poids à 24,8 % en poids d'une émulsion de liant, dans chaque cas par rapport au poids total de l'enrobé à froid.

10. Enrobé à froid, en particulier pour la construction routière, comprenant un mélange de matières minérales et un liant, **caractérisé en ce que** l'enrobé à froid peut être obtenu par mélange d'un mélange de matières minérales avec une émulsion aqueuse de liant, un minéral ou un mélange de minéraux inorganiques formant des hydrates étant ajouté au mélange de matières minérales et/ou au mélange du mélange de matières minérales et de l'émulsion aqueuse de liant, le minéral inorganique formant des hydrates étant une anhydrite.

11. Enrobé à froid selon la revendication 10, **caractérisé en ce que** l'enrobé à froid peut être obtenu par un procédé selon une ou plusieurs des revendications 1 à 9.

12. Utilisation de l'enrobé à froid selon une ou plusieurs des revendications 10 ou 11 pour la construction routière.
